# EUROPÄISCHE PATENTSCHRIFT

(11) **EP 3 076 509 B1**
(45) Veröffentlichungstag und Bekanntmachung des Hinweises auf die Patenterteilung: **06.03.2019**
(21) Anmeldenummer: 16161469.8
(22) Anmeldetag: 21.03.2016
(51) Int. Cl.: H02G 1/12

(54) **KABELMESSER MIT ZWEI KLINGEN**
CABLE KNIFE HAVING TWO BLADES
COUTEAU A OUVRIR LES GAINES DES CABLES COMPRENANT DEUX LAMES

(30) Priorität: 30.03.2015 DE 102015104906
(43) Veröffentlichungstag der Anmeldung: 05.10.2016
(73) Patentinhaber: KRAMPE Immobilien GmbH & Co. KG, 59387 Ascheberg (DE)
(72) Erfinder: Bünnigmann, Carsten, 59387 Ascheberg (DE)
(74) Vertreter: Straube, Urs Norman

(56) Entgegenhaltungen:
- EP-A2- 0 704 951
- DE-C1- 10 001 002
- DE-U1-202006 012 362

## Beschreibung

Die Erfindung bezieht sich auf ein Kabelmesser mit einem Gehäuse als Griff und einer an einer Stirnseite des Gehäuses heraus ragenden Schlitzklinge, über der ein am Gehäuse verschieblich angebrachter, dreieckig gebogener Spannbügel so angeordnet ist, dass er ein unter den Spannbügel eingelegtes Kabel auf die Schlitzklinge drückt, und bei dem eine zusätzliche Hakenklinge an dem Gehäuse befestigt ist.

Kabelmesser werden zum Abmanteln eines Kabelendes genutzt. Dazu ist eine Schlitzklinge vorgesehen, mit der ein Längsschnitt und/oder Rundschnitt in den Kabelmantel ausgeführt werden kann. Danach lässt sich der Kabelmantel am Kabelende leicht entfernen. Damit die Schlitzklinge sicher im Kabelmantel geführt ist, ist ein federbelasteter dreiecksförmiger Spannbügel vorgesehen, der das Kabelende umfasst und dieses auf die Schlitzklinge drückt.

Um Kabel mit verschiedenen Mantelstärken schlitzen zu können, ist typischerweise eine Verstellbarkeit der Schlitzklinge vorgesehen. Der Spannbügel ist für einen Bereich von Kabeldurchmessern dimensioniert. Für abweichende Kabeldurchmesser müssen Kabelmesser mit größeren oder kleineren Spannbügel vorgehalten werden.

Weiterhin ist oft eine Hakenklinge beim Abmanteln hilfreich, insbesondere wenn der Kabelmantel dicker oder recht steif ist. Die Hakenklinge wird am Kabelende so an den Kabelmantel angesetzt, dass der Haken unter den Kabelmantel greift und nun durch Ziehen der Hakenklinge ein Längsschnitt in den Kabelmantel ausgeführt wird.

Ein gattungsgemäßes Kabelmesser ist in der europäischen Patentanmeldung EP 1 887 669 B1 beschrieben. Das dort gezeigte Kabelentmantelungswerkzeug weist die Schlitzklinge, einen federbelasteten Spannbügel und auch eine Hakenklinge auf. Der Spannbügel gibt mit der Größe seines V-förmigen Endes und der Weite der Herausschiebbarkeit aus dem Gehäuse den Bereich für die Durchmesser der zu verarbeitenden Kabel vor. Eine Wechselbarkeit des Spannbügels ist nicht vorgesehen. Die Hakenklinge ist verschieblich im Gehäuse gelagert und wird bei Bedarf aus dem Gehäuse herausgeschoben. Durch die verschieblich Lagerung hat die Hakenklinge keinen festen Sitz am Gehäuse, was die Führung der Hakenklinge beim Schneiden des Kabelmantels beeinträchtigt und das Verletzungsrisiko vergrößert. Das Dokument DE10001002 C1 bezieht sich auf ein Kabelmesser, mit einem Handgriff, einem Messer und einem Klemmbügel. Es ist die Aufgabe der Erfindung, ein Kabelmesser zu offenbaren, das an verschiedene Durchmesser der zu bearbeitenden Kabel anpassbar ist und bei dem eine sichere Führung der Hakenklinge gewährleistet ist.
Diese Aufgabe wird durch ein Kabelmesser gemäß Anspruch 1 gelöst. Vorteilhafte Ausgestaltungen sind in den abhängigen Ansprüchen angegeben.
Das Kabelmesser besitzt ein Gehäuse als Griff und eine Schlitzklinge, die an einer Stirnseite des Gehäuses heraus ragt. Ein verschieblich angebrachter, dreieckig gebogener Spannbügel ist so über der Stirnseite am Gehäuse angeordnet, dass er ein unter den Spannbügel eingelegtes Kabel auf die Schlitzklinge drückt. Weiterhin ist eine zusätzliche Hakenklinge an dem Gehäuse befestigt.
Das Kabelmesser zeichnet sich dadurch aus, dass die Hakenklinge feststehend am Gehäuse befestigt und mit einem Klingenschutz gesichert ist und dass der Spannbügel mittels einer Rastzunge auswechselbar im Gehäuse gehalten ist.
Durch die feststehende Hakenklinge am Gehäuse kann ein sicherer Schnitt geführt werden.
Für die Anpassung an große Bereiche von Kabelquerschnitten sind unterschiedliche Spannbügel für verschiede Bereiche von Kabeldurchmessern vorgesehen.
Der auswechselbare Spannbügel erlaubt das einfache Wechseln des Spannbügels bei Montagearbeiten vor Ort. Es müssen also nur Spannbügel verschiedener Größe vorgehalten werden, nicht verschiedene Kabelmesser.
Die Schlitztiefe wird durch den Überstand der Schlitzklinge aus dem Gehäuse eingestellt. Dies kann einfach über eine Schraubverstellung erfolgen.
Zum Bearbeiten der Kabelenden ist jeweils ein passender Spannbügel mit seinem Stiel in einen Schacht im Gehäuse eingeschoben und mit der Rastzunge an einem federbelasteten Schlitten an einer Ausnehmung im Stiel gehalten ist. Die Rastzunge ist einfach durch eine Öffnung im Gehäuse zurückdrückbar.
Die Öffnung im Gehäuse ist vorteilhaft so gewählt, dass ein Stielende des Rastbügels dort hinein passt und darüber die Rastzunge soweit zurückgedrückt werden kann, dass der im Gehäuse befindliche Rastbügel herausgezogen werden kann.

Die Hakenklinge ist vorteilhaft an der dem Spannbügel gegenüberliegenden Stirnseite des Gehäuses angebracht. Damit ist der Spannbügel beim Arbeiten mit der Hakenklinge nicht im Wege.

Bei Nichtgebrauch ist die Hakenklinge durch den verschieblichen Klingenschutz überdeckt, so dass kein Verletzungsrisiko besteht. Beim Gebrauch der Hakenklinge wird der Klingenschutz in das Gehäuse hinein zurückgeschoben und die Hakenklinge freigegeben.

In den Figuren ist eine Ausführungsform des Kabelmessers dargestellt. Es zeigen:
Fig. 1 eine Draufsicht mit entspanntem Spannbügel und überdeckter Hakenklinge;
Fig. 2 eine Seitenansicht gemäß Fig. 1;
Fig. 3 eine Draufsicht mit gespanntem Spannbügel und freier Hakenklinge;
Fig. 4 eine Seitenansicht gemäß Fig. 2.

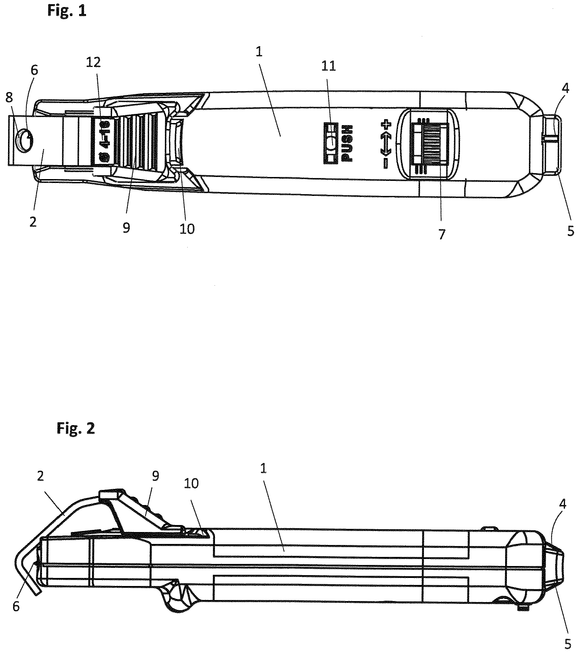

In Fig. 1 und Fig. 2 ist das Kabelmesser in Draufsicht und Seitenansicht mit seinem Gehäuse 1 und seinem zurückgezogenen Spannbügel 2 gezeigt. Die Schlitzklinge 6 an der einen Stirnseite des Gehäuses 1 ist durch das Schauloch 8 gerade zu erkennen. Die Schnitttiefe der Schlitzklinge 6 ist über das Einstellrad 7 verstellbar.

Der Spannbügel 2 ist in den Einsteckschlitz 10 des Gehäuses 1 eingesteckt und kann über die Öffnung 11 gelöst werden. Die Daumenplatte 9 erlaubt das Vorschieben des Spannbügels 2. Die Bereichsangabe 12 kennzeichnet den gerade eingesteckten Spannbügel.

Die Hakenklinge 4 befindet sich an der gegenüberliegenden Stirnseite des Gehäuses 1 und ist mit dem Klingenschutz 5 überdeckt.

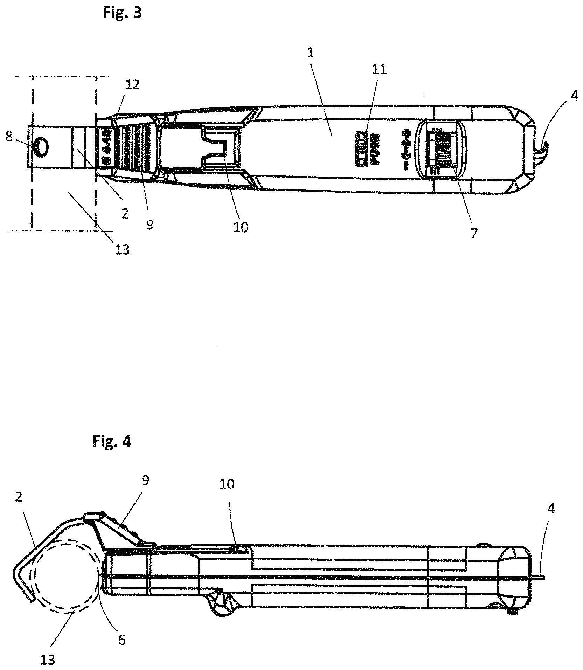

In Fig. 3 und Fig. 4 ist das Kabelmesser in Draufsicht und Seitenansicht mit einem unter dem heraus gedrückten Spannbügel 2 eingeklemmten Kabel gezeigt. Die Schlitzklinge 6 an der einen Stirnseite des Gehäuses 1 dringt in den Kabelmantel 13 ein. Die Schnitttiefe der Schlitzklinge 6 im Kabelmantel 13 ist über das Einstellrad 7 verstellbar.

Der Spannbügel 2 ist in dem Einsteckschlitz 10 des Gehäuses 1 geführt und kann durch die Daumenplatte 9 vorgeschoben werden.

Über die Öffnung 11 kann der Spannbügel 2 gelöst werden. Die Bereichsangabe 12 kennzeichnet den gerade eingesteckten Spannbügel.

Die Hakenklinge 4 befindet sich an der gegenüberliegenden Stirnseite des Gehäuses 1. Der Klingenschutz ist eingeschoben und daher nicht sichtbar.

### Bezugszeichen

- 1: Gehäuse
- 2: Spannbügel
- 3: Stiel des Spannbügels
- 4: Hakenklinge
- 5: Klingenschutz
- 6: Schlitzklinge
- 7: Einstellrad für die Schlitzklinge
- 8: Schauloch
- 9: Daumenplatte
- 10: Einsteckschlitz
- 11: Öffnung
- 12: Bereichsangabe
- 13: Kabelmantel

## Patentansprüche

1. Kabelmesser mit einem Gehäuse (1) als Griff und einer an einer Stirnseite des Gehäuses (1) heraus ragenden Schlitzklinge (6), über der ein am Gehäuse (1) verschieblich angebrachter, dreieckig gebogener Spannbügel (2) so angeordnet ist, dass er ein unter den Spannbügel (2) eingelegtes Kabel auf die Schlitzklinge (6) drückt, und bei dem eine zusätzliche Hakenklinge (4) an dem Gehäuse befestigt ist,
**dadurch gekennzeichnet, dass**
die Hakenklinge (4) feststehend am Gehäuse (1) befestigt und mit einem Klingenschutz (5) gesichert ist, und dass der Spannbügel (2) mittels einer Rastzunge auswechselbar im Gehäuse (1) gehalten ist, wobei
die Hakenklinge (4) an der dem Spannbügel (2) gegenüberliegenden Stirnseite des Gehäuses (1) angebracht und
der Klingenschutz (5) der Hakenklinge (4) in das Gehäuse (1) hinein verschieblich ist.

2. Kabelmesser nach Anspruch 1, **dadurch gekennzeichnet, dass** unterschiedliche Spannbügel (2) für verschiede Bereiche von Kabeldurchmessern vorgesehen sind.

3. Kabelmesser nach Anspruch 1, **dadurch gekennzeichnet, dass** jeweils ein Spannbügel (2) mit seinem Stiel in einen Schacht im Gehäuse (1) eingeschoben ist und mit der Rastzunge eines federbelasteten Schlittens an einer Ausnehmung im Stiel gehalten ist.

4. Kabelmesser nach Anspruch 3, **dadurch gekennzeichnet, dass** die Rastzunge durch eine Öffnung (11) im Gehäuse (1) zurückdrückbar ist.

5. Kabelmesser nach Anspruch 1, **dadurch gekennzeichnet, dass** der Überstand der Schlitzklinge (6) aus dem Gehäuse (1) einstellbar ist.

## Claims

1. A cable knife with a housing (1) as a handle and a slitting blade (6) projecting out of the housing (1) at a front face, wherein a triangularly bent clamping bracket (2) is displaceable affixed to the housing (1) above the slitting blade and arranged so as to press a cable laid in under the clamping bracket (2) onto the slitting blade (6), and wherein an additional hooked blade (4) is attached to the housing, **characterized in that**
the hooked blade (4) is attached to the housing (1) in a fixed manner and secured with a blade guard (5) and **in that** the clamping bracket (2) is held by means of an engagement tongue in the housing (1) in a replaceable manner, wherein
the hooked blade (4) is attached to the front face of the housing (1) opposite from the clamping bracket (2), and
the blade guard (5) of the hooked blade (4) is displaceable into the housing (1).

2. The cable knife according to claim 1, **characterized in that** different clamping brackets (2) are provided for different ranges of cable diameters.

3. The cable knife according to claim 1, **characterized in that** respectively one clamping bracket (2) is pushed with its post into a chamber in the housing (1) and is held at a recess in the post with the engagement tongue of a spring-loaded carriage.

4. The cable knife according to claim 3, **characterized in that** the engagement tongue can be pressed back through an opening (11) in the housing (1).

5. The cable knife according to claim 1, **characterized in that** the projecting length of the slitting blade (6) out of the housing (1) is adjustable.

## Revendications

1. Couteau pour câble, pourvu d'un boîtier (1) faisant office de manche et d'une lame à inciser (6) saillant hors d'une face frontale du boîtier (1) au-dessus de laquelle un étrier de serrage (2) monté de manière déplaçable sur le boîtier (1), recourbé en triangle est placé de telle sorte qu'il pousse un câble inséré en-dessous de l'étrier de serrage (2) sur la lame à inciser (6) et sur lequel une lame à crochet (4) supplémentaire est fixée sur le boîtier,
**caractérisé en ce que**
la lame à crochet (4) est fixée de manière stationnaire sur le boîtier (1) et est sécurisée à l'aide d'un protège-lame (5) et **en ce que** l'étrier de serrage (2) est maintenu de manière interchangeable sur le boîtier (1) au moyen d'une languette d'enclenchement,
la lame à crochet (4) étant montée sur la face frontale du boîtier (1) qui est au vis-à-vis de l'étrier de serrage (2) et
le protège-lame (5) de la lame à crochet (4) étant déplaçable à l'intérieur du boîtier (1).

2. Couteau pour câble selon la revendication 1, **caractérisé en ce que** différents étriers de serrage (2) sont prévus pour différentes plages de diamètres de câbles.

3. Couteau pour câble selon la revendication 1, **caractérisé en ce que** chaque fois un étrier de serrage (2) est inséré par sa tige dans un compartiment dans le boîtier (1) et par la languette d'enclenchement d'un chariot soumis à ressort, est maintenu sur un évidement dans la tige.

4. Couteau pour câble selon la revendication 3, **caractérisé en ce que** la languette d'enclenchement est susceptible d'être repoussée en arrière à travers un orifice (11) dans le boîtier (1).

5. Couteau pour câble selon la revendication 1, **caractérisé en ce que** le surplomb de la lame à inciser (6) hors du boîtier (1) est réglable.
